# DEMANDE DE BREVET EUROPEEN

(11) **EP 1 881 449 A1**
(43) Date de publication de la demande: **23.01.2008**
(21) Numéro de dépôt: 06290868.6
(22) Date de dépôt: 30.05.2006
(51) Int. Cl.: G06Q 30/00

(54) **Procédé de caractérisation de la qualité nutritionnelle de produits alimentaires**

(71) Demandeur: Bio Intelligence Service, 94200 Ivry sur Seine (FR)
(72) Inventeur: Labouze, Eric, 75005 Paris (FR)
(74) Mandataire: Jacquard, Philippe Jean-Luc

(57) **Abrégé**

L'Invention est relative à un procédé de caractérisation de la qualité nutritionnelle d'un produit alimentaire à partir de sa formulation caractérisé en ce qu'il comporte les étapes suivantes :
A) pour au moins certains des nutriments ou groupes de nutriments qui sont contenus dans les ingrédients de la formulation dudit produit et dont la consommation serait à modérer ou bien à augmenter, définir un facteur de pondération.
B) noter ceux desdits nutriments dont la consommation serait à modérer de la manière suivante :
a) attribuer à un nutriment une note positive donnée si sa présence dans le produit considéré correspond à un premier cas où elle égale ou est en deçà d'au moins un seuil de recommandation nutritionnelle
b) attribuer à un nutriment une note négative donnée si sa présence dans le produit correspond à un deuxième cas où elle égale ou dépasse au moins un seuil de consommation actuelle observée dans une population de référence
c) sinon, attribuer à un nutriment une note comprise entre la note positive et la note négative.

C) noter ceux desdits nutriments dont la consommation serait à augmenter de la manière suivante:
a) attribuer à un nutriment une note positive donnée si sa présence dans le produit considéré correspond à un premier cas où elle égale ou dépasse au moins un seuil de recommandation nutritionnelle
b) attribuer à un nutriment une note négative donnée si sa présence dans le produit correspond à un deuxième cas où elle égale ou est en deçà d'au moins un seuil de consommation actuelle observée dans une population de référence
c) sinon, attribuer à un nutriment une note comprise entre la note positive et la note négative.

D) dans le cas où certains nutriments ne sont pas traités séparément mais par groupe, regrouper les notes de ces nutriments en une note pour ledit groupe de nutriments.
E) faire séparément la somme S₁ des notes positives et la somme S₂ des notes négatives obtenues, en tenant compte des facteurs de pondération appliqués à chaque descripteur.
F) attribuer au produit une note composite qui est constituée par la somme S₁ et la somme S₂.

## Description

La présente invention a pour objet un procédé de caractérisation de la qualité nutritionnelle de produits alimentaires.

Des produits perçus par le consommateur comme nutritionnellement similaires et substituables entre eux sont couramment présentés sur les mêmes rayons des magasins tels que les supermarchés.

Un ingrédient est défini comme toute substance, y compris les additifs alimentaires, utilisée dans la fabrication ou la préparation d'une denrée alimentaire et présente dans le produit définitif.

Un nutriment est défini comme tout élément ou composé organique ou inorganique, contenu dans les aliments et qui peut être utilisé par l'organisme sans subir de transformation digestive pour être assimilé par les cellules.

L'étiquetage des nutriments a gommé les différences entre les produits : ils contiennent tous des glucides, des lipides, et des protides.

De plus, les listes d'ingrédients et les listes de nutriments sont peu parlantes pour le consommateur.

Il existe par ailleurs des systèmes simples reposant sur des profils nutritionnels définis a *priori* pour répondre aux demandes des consommateurs de produits "sains" : il s'agit des logos "santé" qui sont apposés sur certains produits, sans que l'on sache par ailleurs quoi penser des autres produits ne portant pas ces logos.

Ces logos ne sont utilisables que pour certains produits et ne permettent pas au consommateur d'équilibrer sa consommation d'aliments dans son ensemble.

Ces logos santé sont par exemple :
- le "signposting" anglais, créé par l'agence publique Foods Standards Agency pour aider les consommateurs à choisir des produits plus sains : http://www.food.gov.uk/foodlabelling/signposting/
- le "SmartSpot" de "PepsiCo", un logo appliqué sur les produits de la marque les plus sains : www.smartspot.com.

Il existe également un certain nombre de systèmes de notation qui conduisent à l'attribution aux produits alimentaires d'une note globale unique qui est censée représenter la qualité de l'aliment pour la santé.

Une telle échelle de notation conduit à une information peu satisfaisante, car les défauts et les qualités sont sommés en un indice global unique, ce qui peut conduire à masquer les défauts importants d'un produit donné.

La présente invention vise à proposer un procédé permettant une classification des produits alimentaires de manière à permettre à un consommateur d'améliorer sa consommation alimentaire.

L'invention concerne ainsi un procédé de caractérisation de la qualité nutritionnelle d'un produit alimentaire à partir de sa formulation, caractérisé en ce qu'il comporte les étapes suivantes :
A) pour au moins certains des nutriments ou groupes de nutriments qui sont contenus dans les ingrédients de la formulation dudit produit et dont la consommation serait à modérer ou bien à augmenter, définir un facteur de pondération. Un groupe de nutriments est constitué par la liste de deux nutriments ou plus qui sont considérés ensemble pour l'étape de pondération, par exemple les vitamines (ou les minéraux, ou les acides gras). Lesdits nutriments ou groupes de nutriments sont appelés ci-après descripteurs de la qualité nutritionnelle.
B) noter ceux desdits nutriments dont la consommation serait à modérer de la manière suivante :
   a) attribuer à un nutriment une note positive donnée si sa présence dans le produit considéré correspond à un premier cas où elle égale ou est en deçà d'au moins un seuil de recommandation nutritionnelle
   b) attribuer à un nutriment une note négative donnée si sa présence dans le produit correspond à un deuxième cas où elle égale ou dépasse au moins un seuil de consommation actuelle observée dans une population de référence
   c) sinon, attribuer à un nutriment une note comprise entre la note positive et la note négative.
C) noter ceux desdits nutriments dont la consommation serait à augmenter de la manière suivante:
   a) attribuer à un nutriment une note positive donnée si sa présence dans le produit considéré correspond à un premier cas où elle égale ou dépasse au moins un seuil de recommandation nutritionnelle
   b) attribuer à un nutriment une note négative donnée si sa présence dans le produit correspond à un deuxième cas où elle égale ou est en deçà d'au moins un seuil de consommation actuelle observée dans une population de référence
   c) sinon, attribuer à un nutriment une note comprise entre la note positive et la note négative.
D) dans le cas où certains nutriments ne sont pas traités séparément mais par groupe, regrouper les notes de ces nutriments en une note pour ledit groupe de nutriments.
E) faire séparément la somme S₁ des notes positives et la somme S₂ des notes négatives obtenues, en tenant compte des facteurs de pondération appliqués à chaque descripteur.
F) attribuer au produit une note composite qui est constituée par la somme S₁ et la somme S₂.

Par exemple, la note positive choisie est égale à 1, et la note négative, égale à -1.

La note attribuée dans le troisième cas peut être 0, ou bien une note évoluant entre la note positive et la note négative au prorata de la présence du nutriment dans le produit.

On peut également utiliser deux seuils de recommandation nutritionnelle et/ou deux seuils de consommation observée, ce qui conduit selon le cas à deux valeurs possibles de la note positive et/ou négative, ou bien à deux échelles de notation, si on considère une notation proportionnelle.

D'autres caractéristiques et avantages de l'invention apparaîtront mieux à la lecture de la description ci-après, en liaison avec les dessins dans lesquels :
- les figures 1a et 1b illustrent le procédé d'attribution d'une note ;
- les figures 2a et 2b illustrent la mise en oeuvre d'une notation continue ;

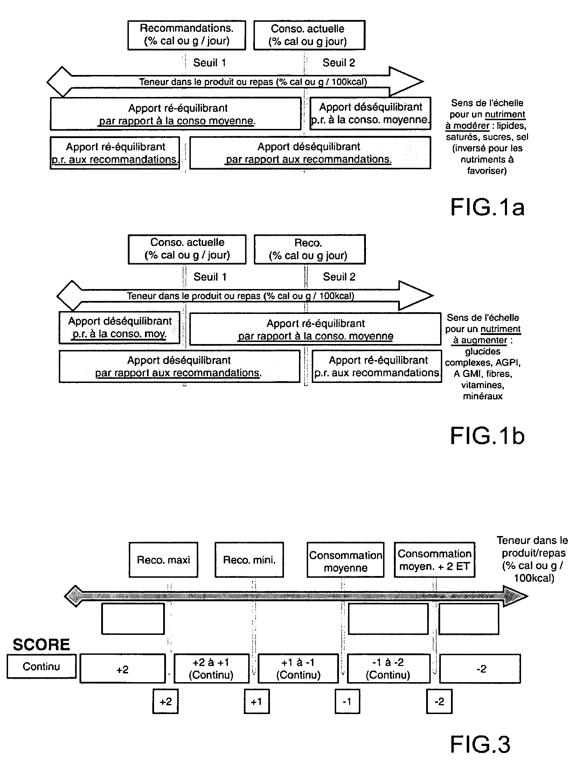

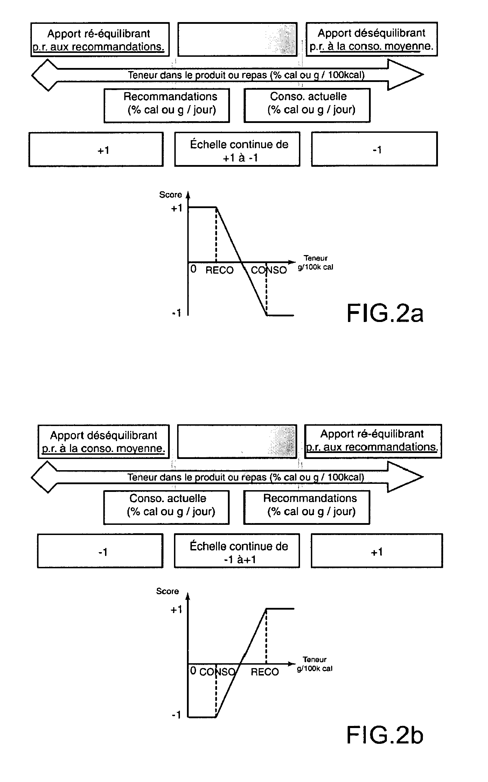

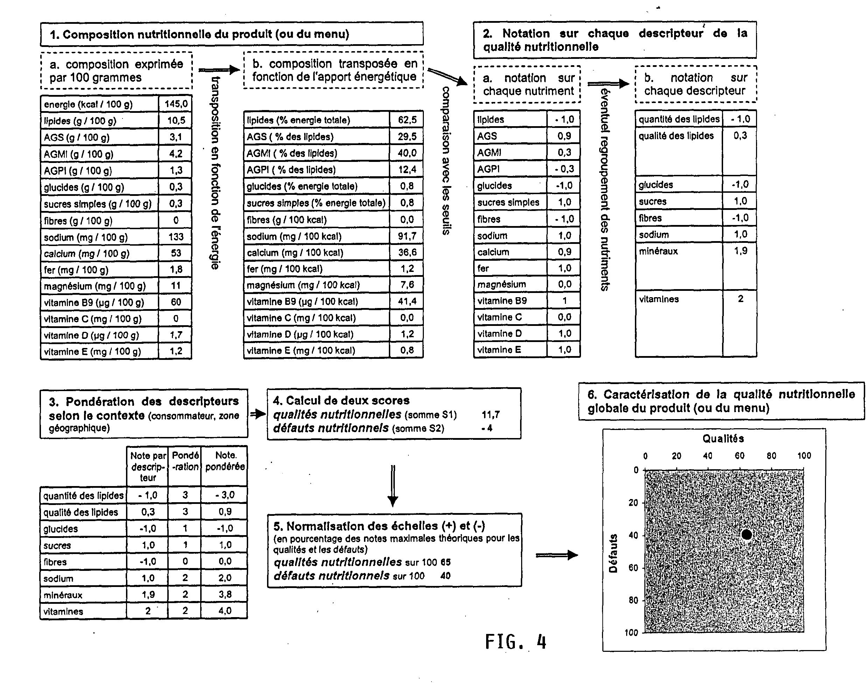

- la figure 3 illustre une notation à plusieurs seuils. La figure 3 illustre le cas de la notation d'un nutriment à modérer. Dans la figure, ET signifie écart-type (au niveau du seuil correspondant à la valeur -2). Pour un nutriment donné, le seuil correspondant est défini en ajoutant à la valeur de consommation moyenne pour un groupe de population, la valeur de deux écarts-type (tels que définis par les données statistiques de consommation moyenne pour le groupe de population). Dans le cas d'un nutriment à augmenter, les seuils sont inversés selon le principe des figures 1a et 1b ou 2a et 2b.
- et la figure 4 illustre le déroulement du procédé selon l'invention.

La tendance réglementaire est de restreindre l'utilisation d'allégations nutritionnelles et d'allégation santé qui sont trop souvent utilisées comme supports publicitaires, alors que dans l'état actuel de la réglementation, il est possible d'utiliser des allégations nutritionnelles ou santé pour des produits n'ayant pas un profil nutritionnel souhaitable.

La tendance actuelle est à une sévérisation de la réglementation, par exemple pour éviter une allégation santé telle que "teneur élevée en calcium" pour un produit à forte teneur en matières grasses ou bien encore une allégation "faible teneur en matières grasses" pour un produit contenant des quantités importantes de sucre et/ou de sel (cf. Projet de règlement de la Communauté Européenne du 16 Juillet 2003 sur les allégations nutritionnelles et de santé sur les produits).

Selon ce projet, il est prévu de restreindre l'utilisation d'allégations nutritionnelles et de santé selon le profil nutritionnel des produits relativement à la teneur en matières grasses, à la teneur en graisses saturées, à la teneur en acides gras trans, en sucres, et en sodium.

La recherche scientifique établit en effet un lien entre une consommation importante de ces nutriments et certaines maladies chroniques : maladies cardio-vasculaires, diabète, cancers, obésité, ostéoporose, affections dentaires.

Si des bénéfices sont attendus de la nouvelle réglementation relativement à la santé, au choix des aliments par les consommateurs, et à la définition d'un cadre réglementaire pour l'industrie, il n'en reste pas moins qu'il n'existe pas actuellement de moyen satisfaisant pour caractériser techniquement les produits alimentaires du point de vue de leur impact sur la santé, et qui soit facilement perçu par le consommateur ou qui soit facilement utilisable pour les concepteurs de produits.

On rappellera ci-après comment se définit actuellement la notation des produits en analysant un certain nombre d'articles caractéristiques :

L'article de Mike O'NEILL "Traffic lights for food ?" (National Consumer Council - London - Juin 2004) propose un indice global selon plusieurs modèles dont deux préférés pour classer un aliment comme n'étant pas bon pour la santé. Cet indice global ne permet donc pas une classification de l'ensemble des aliments.

L'article "Criteria for the nutritional evaluation of foods" (Netherlands Nutrition Center - 2005 sur le site www.voedingscentrum.nl) déconseille une classification binaire des produits entre produits sains et produits néfastes à la santé. Cet article ne permet pas de déterminer un indice significatif.

L'article d'Adam DREWNOWSKI "Concept of a nutritious food : toward a nutrient density score" paru dans American Journal of Clinical Nutrition 2005 ; 82, p. 721 à 732 (American Society for Clinical Nutrition) propose un score (NNR = "Naturally Nutrient Rich") prenant en compte le rapport entre l'apport en nutriments et l'apport calorique (par rapport à une norme de 2000 kcal/jour) sans prendre en compte la présence des nutriments non désirables. 14 nutriments sont pris en compte : protection en calcium, fer, vitamine A, B12, C, D, E, thiamine, roboflavine, folate (vitamine B), graisses non saturées, potassium et zinc.

Cet indice global ne permet pas une classification satisfaisante des aliments.

L'article "Composite Index for Aggregating Nutrient Density Using Food Labels : Ratio of Recommanded to Restricted Food Components" de Douglas M. SCHEIDT et Collaborateurs (Journal of Nutrition Education and Behaviour, vol. 36 Issue 01-2004, article JNE - 36 - 01 - 13407, p. 35 et suivantes) propose un indice unique qui est un rapport entre les nutriments alimentaires recommandés et les nutriments non souhaités.

Les nutriments recommandés sont : protéines, fibres, calcium, fer, vitamine A et C alors que les nutriments non souhaités sont les calories, les sucres, le cholestérol, les graisses saturés et le sodium.

Même si cet indice est de nature à aider le consommateur dans ses choix, il n'évite pas l'écueil majeur qui consiste à masquer les défauts d'un produit par ses qualités.

Enfin, l'article de SOOWON KIM et Collaborateurs du Department of Nutrition and Carolina Population Center, the University of North Carolina at Chapell Hill et intitulé "The Diet quality Index - International (DQI-I) Provides an Effective Tool for Cross - National Comparison of Diet Quality as Illustrated by China and the United States" (4th International Conference on Dietary Assesment Methods, Sept. 2000, Tucson Arizona - p. 3476 à 3484) propose un indice composite qui permet de piloter des programmes comparatifs mais qui n'offre pas de perspectives pour une utilisation par des consommateurs individuels.

D'autres approches ont été proposées mais leur solution n'est pas satisfaisante car les défauts nutritionnels d'un produit sont ou bien non pris en compte, ou bien non explicitement quantifiés.

On citera par exemple :
Nutrient Profiling Model from the UK Foods Standards Agency, available on http://www.food.gov.uk/healthiereating/nutlab/nutprofmod
   - Educational and Technological Innovations Required to Enhance the Selection of Desirable Nutrients ; Lachance et al - Clinical Nutrition 5 (6):257-267 1986
   - "Towards better choice nutritious food index" de Bazibarich and Ricci, Australian journal of nutrition and dietetics 1998; 55:10-20

L'invention propose un procédé permettant de caractériser la qualité d'un produit du point de vue nutritionnel à l'aide d'un indice comportant deux chiffres qui prennent en compte séparément les qualités et les défauts nutritionnel du produit à évaluer par rapport d'une part aux recommandations officielles (en matière d'apports nutritionnels journaliers) et d'autres part à un indice moyen de consommation observée.

Le but de cet indice double (facile à représenter sur un graphe à deux axes) est de permettre, notamment à un consommateur, de synthétiser la formulation du produit du point de vue de sa qualité du point de vue nutritionnel et de la santé.

En effet, les recommandations nutritionnelles définissent l'alimentation idéale, mais la consommation réelle ne lui correspond évidemment pas. La complexité de la composition des aliments (produits, repas) leur confère un caractère ou un potentiel plus ou moins équilibrant.

Il s'agit de fournir au consommateur (ou au concepteur de produits) une indication pouvant servir de repère par rapport à un enjeu de santé publique exprimé sous forme de données techniques souhaitables, à partir de l'élaboration de données techniques du produit (sa composition).

L'indice représentant la qualité nutritionnelle globale d'un produit (ou d'un menu) donné est défini en fonction de la composition nutritionnelle du produit (ou du menu), du type de consommateur (enfant, adulte...), des objectifs de santé publique dans le pays considéré, et de la famille de produits (biscuits, produits laitiers, plats préparés...).

L'indice est défini selon une logique représentative de la distance à l'objectif qui est constitué par les recommandations et objectifs de santé publique exprimés sous forme de données techniques représentant la formulation du produit, en tenant compte également des données de consommation moyenne observées pour chaque nutriment.

A chaque nutriment est associé un score de qualité selon une échelle d'évaluation unique (-1/0/+1 ou -2 à +2) ; discontinue ou continue.

Chaque nutriment est pondéré selon la famille de produits et les objectifs de santé publique ( par exemple facteurs 0,5 à 3). Les facteurs de pondération sont définis par un groupe d'experts de renommée internationale, et mis à jour tous les 2 ans.

Au final, chaque produit/repas est affecté de deux scores : un score des qualités nutritionnelles qui est la somme des scores positifs et un score des défauts nutritionnels qui est la somme des scores négatifs, sans compensation entre eux.

Huit descripteurs de la qualité nutritionnelle sont pris en compte, à savoir :
1) quantité des lipides
2) qualité des lipides
3) glucides totaux
4) sucres simples
5) fibres
6) sodium
7) minéraux
8) vitamines.

On en tire un groupe de 15 critères à utiliser par défaut :
- glucides, sucres, lipides, acides gras saturés (AGS), acides gras mono-insaturés (AGMI), acides gras poly-insaturés (AGPI), fibres, vitamines B9, C, D, E, sel/sodium, calcium, magnésium, fer.

Les vitamines et les minéraux pris en compte sont ceux pour lesquels il existe un écart entre la consommation constatée et les recommandations nutritionnelles.

Pour analyser un plus grand nombre de produits, mais avec une robustesse moindre, on peut utiliser seulement 5 critères de base :
glucides, sucres, lipides totaux, AGS, AGPI.

On remarquera que la notation ne prend pas du tout en compte les protéines pour lesquelles il n'existe en général pas de carence et dont il n'y a pas lieu non plus de limiter la consommation.

Trois régions sont utilisées pour la notation (voir Fig. 1), à l'aide de deux seuils dont l'un représente la consommation actuelle observée, et l'autre les recommandations nutritionnelles, pour un groupe de population donnée.

Région 1 : le nutriment ou descripteur respecte les apports recommandés (ration dite rééquilibrante). On lui attribue une note positive par exemple + 1.

Région 2 : le nutriment ou descripteur présent introduit un déséquilibre par rapport à la consommation actuelle constatée (ration dite déséquilibrante). On lui attribue une note négative par exemple -1.

Région 3 : comprise entre les régions 1 et 2. On attribue une note égale à 0, ou bien une note interpolée entre la note positive et la note négative, par exemple au prorata de la présence du nutriment.

Pour chaque nutriment, on définit les seuils (voir Fig. 1a et 1b). On peut mettre en oeuvre une notation continue par exemple au prorata de la présence du nutriment. Les Figures 2a et 2b illustrent une telle notation dans la région comprise entre les seuils de recommandation nutritionnelle et de consommation observée.

Pour un nutriment pour lequel une modération de la consommation est recommandée (quantité de lipides, acides gras saturés, sucres, sel) on détermine un seuil 1 correspondant aux recommandations, qui est inférieur au seuil 2 correspondant à la consommation actuelle (Fig. 1a). Par exemple pour l'indicateur "quantité de lipides", le seuil 1 est égal à 35% de l'apport calorique total du produit (ou du menu) et le seuil 2 est égal à 37%.

Pour un nutriment pour lequel une augmentation de la consommation est recommandée (glucides totaux, fibres, acides gras mono-et poly-insaturés, vitamines et minéraux), on définit un seuil 1 correspondant à la consommation actuelle, qui est inférieur au seuil 2 correspondant aux recommandations (Fig. 1b). Par exception, on pourra ne pas attribuer de score négatif au cas où la présence des vitamines et minéraux (ou certains d'entre eux) est inférieure à la consommation actuelle.

On peut utiliser des échelles à plusieurs seuils (Fig. 3).

La pondération des critères de qualité nutritionnelle peut être choisi comme étant celle qui est définie par un groupe d'experts (facteur de pondération entre 0 et 3), comme dans le tableau ci-dessous :

| | Glucides totaux | Sucres simples | Lipides totaux (quantité) | Qualité lipidique | fibres | sodium | minéraux | vitamines |
|---|---|---|---|---|---|---|---|---|
| Céréales, légumineuses, pommes de terre et produits dérivés (incluant les biscuits et pâtisseries) | 2 | 2 | 2 | 2 | 1,5 | 2 | 1 | 1 |
| Lait, produits laitiers, fromages | 1 | 2 | 3 | 2 | 1 | 2 | 3 | 1 |
| Viandes, poissons, oeufs | 1 | 1 | 3 | 3 | 0 | 2 | 2 | 2 |
| Matières grasses et graines oléagineuses | 0 | 0 | 2 | 3 | 0 | 1 | 1 | 2 |
| Fruits, légumes et produits dérivés, incluant les jus | 2 | 2 | 1 | 1 | 1,5 | 1 | 2 | 3 |
| Plats composés | 2 | 1 | 2 | 2 | 1,5 | 1 | 1,5 | 1,5 |
| Desserts non laitiers et non céréaliers (produits sucrés) | 3 | 3 | 2 | 2 | 1 | 1 | 1 | 1 |
| Goûters composés | 2 | 2 | 2 | 1 | 1,5 | 1 | 1 | 1 |

La figure 4 illustre le déroulement du procédé. On établit tout d'abord la composition nutritionnelle du produit à partir des ingrédients présents dans la formulation du produit (ou du menu) (étape 1 a). Chaque nutriment est exprimé en fonction de l'apport énergétique du produit (ou du menu) (étape 1 b.).

La quantité de lipides est chiffrée en % de l'apport calorique total du produit (ou du menu). Il en va de même pour les sucres et les glucides. L'évaluation qualitative des lipides est obtenue en déterminant la proportion, en % des lipides totaux, d'AGS et d'AGMI et d'AGPI. Pour les fibres, le sodium, les vitamines et les minéraux, on exprime la quantité de chaque nutriment par 100 kcal du produit (ou du menu).

En comparant alors la composition en chaque nutriment avec le seuil correspondant, on obtient une note pour chaque nutriment (étape 2 a).

On passe alors (étape 2 b) des notes par nutriments aux notes par descripteurs de la qualité nutritionnelle selon le principe suivant :
■ quantité de lipides : égale la note du nutriment lipides ;
■ qualité des lipides :
   si les lipides représentent moins de 10% de l'énergie du produit, note 0 ;
   sinon moyenne des notes AGS, AGMI, AGPI ;
■ glucides :
   si les glucides sont composés à plus de 90% de sucres, note minimale (-1) ;
   sinon égale la note du nutriment glucides ;
■ sucres : égale la note du nutriment sucre ;
■ fibres : égale la note du nutriment fibres ;
■ sodium : égale la note du nutriment sodium ;
■ minéraux : somme des notes des nutriments calcium, fer et magnésium, plafonnée à 2 ;
■ vitamines : somme des notes des nutriments vitamines B9, C, D et E, plafonnée à 2.

On applique ensuite (étape 3) une pondération égale à 3 pour les deux critères sur les lipides (quantité et qualité), à 1 pour les glucides et les sucres, nulle pour les fibres, et égale à 2 pour le sodium, les vitamines et les minéraux.

On obtient alors (étape 4) le score du produit : +11,7 et -4 que l'on peut répartir sur une échelle à deux dimensions. On peut normaliser (étape 5) les scores en calculant les notes maximales théoriques d'une part pour le score positif et d'autre part pour le score négatif en tenant compte des pondération et en divisant les scores obtenus à l'étape 4 par ces valeurs.

Ici, les notes maximales théoriques sont 18 pour la note positive et -10 pour la note négative, la différence s'expliquant par l'exception observée pour les vitamines et minéraux, qui ne donnent lieu qu'à une note positive ou nulle.

Le score + est donc 11,7/18 = 65 %

Le score - est donc -4 / -10 = 40 %

On peut comparer les produits d'une même catégorie (ex. les biscuits, les produits laitiers, les plats préparés, etc.) en les reportant sur un même graphe ce qui donne une visualisation immédiate à deux dimensions des qualités cumulées et des défauts cumulés de chacun des produits (étape 6).

Pour d'autres produits on peut utiliser d'autres pondérations, par exemple :
Quantité de lipides (3), Qualité des lipides (1), Glucides (1), Sucres (2), Sodium (1), Fibres (1,5), Minéraux (1), Vitamines (1) pour des biscuits sucrés.

Pour la famille des plats composés, on peut utiliser par exemple la pondération suivante :
Quantité de lipides (1), Qualité des lipides (1), Glucides (2), Sucres (1), Sodium (1), Fibres (1,5), Minéraux (2), Vitamines (2).

A titre d'exemple, une autre définition des facteurs de pondération, allant de 1 à 3, peut être définie comme dans le tableau ci-après :

| | | Proportion des apports par familles d'aliments | | | | | | (échelle de 1 à 3) | |
|---|---|---|---|---|---|---|---|---|---|
| Code | Familles | Glucides disponibles | sucres | Fibres | Lipides (quantité) | Qualité lipidique | Sel | Minéraux (hors sel) | Vitamines |
| 1 | Céréales, légumineuses, pomme de terre et produits dérivés (dont biscuits, pâtisseries, CPAC) | 3,0 | 1,1 | 2,8 | 1,3 | 1,1 | 2,1 | 1,2 | 1,0 |
| 2 | Lait, produits laitiers, fromages | 1,3 | 1,8 | 1,0 | 1,9 | 2,1 | 1,7 | 3,0 | 1,3 |
| 3 | Viandes, poissons et oeufs | 1,0 | 1,0 | 1,0 | 3,0 | 2,9 | 2,5 | 2,5 | 2,8 |
| 4 | Graisses végétales et animales, graines oléagineuses | 1,0 | 1,1 | 1,1 | 3,0 | 2,8 | 1,0 | 1,1 | 2,4 |
| 5 | Fruits, légumes et produits dérivés (dont jus de fruits) | 1,6 | 2,4 | 3,0 | 1,0 | 1,2 | 1,7 | 1,5 | 2,4 |
| 6 | Plats composés | 1,8 | 1,0 | 2,2 | 2,5 | 2,2 | 3,0 | 1,8 | 1,5 |
| 7 | Produits sucrés sans céréales ni lait | 1,9 | 3,0 | 1,1 | 1,2 | 1,2 | 1,0 | 1,1 | 1,1 |
| 8 | Boissons | 1,9 | 3,0 | 1,1 | 1,0 | 1,0 | 1,1 | 2,7 | 2,5 |
| 9 | Autres | 1,1 | 1,0 | 1,1 | 2,4 | 3,0 | 1,6 | 1,0 | 2,1 |

## Revendications

1. Procédé de caractérisation de la qualité nutritionnelle d'un produit alimentaire à partir de sa formulation **caractérisé en ce qu'**il comporte les étapes suivantes :
A) pour au moins certains des nutriments ou groupes de nutriments qui sont contenus dans les ingrédients de la formulation dudit produit et dont la consommation serait à modérer ou bien à augmenter, définir un facteur de pondération.
B) noter ceux desdits nutriments dont la consommation serait à modérer de la manière suivante :
a) attribuer à un nutriment une note positive donnée si sa présence dans le produit considéré correspond à un premier cas où elle égale ou est en deçà d'au moins un seuil de recommandation nutritionnelle
b) attribuer à un nutriment une note négative donnée si sa présence dans le produit correspond à un deuxième cas où elle égale ou dépasse au moins un seuil de consommation actuelle observée dans une population de référence
c) sinon, attribuer à un nutriment une note comprise entre la note positive et la note négative.
C) noter ceux desdits nutriments dont la consommation serait à augmenter de la manière suivante:
a) attribuer à un nutriment une note positive donnée si sa présence dans le produit considéré correspond à un premier cas où elle égale ou dépasse au moins un seuil de recommandation nutritionnelle
b) attribuer à un nutriment une note négative donnée si sa présence dans le produit correspond à un deuxième cas où elle égale ou est en deçà d'au moins un seuil de consommation actuelle observée dans une population de référence
c) sinon, attribuer à un nutriment une note comprise entre la note positive et la note négative.
D) dans le cas où certains nutriments ne sont pas traités séparément mais par groupe, regrouper les notes de ces nutriments en une note pour ledit groupe de nutriments.
E) faire séparément la somme S₁ des notes positives et la somme S₂ des notes négatives obtenues, en tenant compte des facteurs de pondération appliqués à chaque descripteur.
F) attribuer au produit une note composite qui est constituée par la somme S₁ et la somme S₂.

2. Procédé selon la revendication 1, **caractérisé en ce que** la note positive est égale à +1 et **en ce que** la note négative est égale à -1.

3. Procédé selon une des revendications 1 et 2, **caractérisé en ce que** dans le troisième cas, la note est égale à zéro.

4. Procédé selon une des revendications 1 à 3, **caractérisé en ce que** dans le troisième cas, la note évolue entre la note positive et la note négative au prorata de la présence du nutriment dans le produit.

5. Procédé selon une des revendications précédentes, **caractérisé en ce que** pour la quantité de lipides, et/ou les sucres et/ou les glucides, les seuils sont définis en pourcentage de l'apport calorique total.

6. Procédé selon une des revendications précédentes, **caractérisé en ce que** pour les vitamines et/ou les minéraux, on comptabilise le pourcentage des apports journaliers par 100 kcal.

7. Procédé selon une des revendications précédentes, **caractérisé en ce que** pour la qualité lipidique, les seuils sont définis en pourcentage d'acides gras saturés et d'acides gras mono-insaturés.

8. Procédé selon une des revendications précédentes, **caractérisé en ce qu'**il y a deux seuils de recommandation nutritionnelle et deux valeurs de notes positives.

9. Procédé selon une des revendications précédentes, **caractérisé en ce qu'**il y a deux seuils de consommation observée et deux valeurs de notes négatives.
